# EUROPEAN PATENT SPECIFICATION

(11) **EP 1 991 775 B1**
(45) Date of publication and mention of the grant of the patent: **07.05.2014**
(21) Application number: 06807726.2
(22) Date of filing: 03.11.2006
(51) Int. Cl.: B66C 23/18, B66C 23/20, F03D 1/00

(54) **METHOD AND SYSTEM FOR HOISTING HEAVY PARTS ONTO A WIND TURBINE**
VERFAHREN UND VORRICHTUNG ZUM HEBEN SCHWERER BAUTEILE AUF EINER WINDKRAFTANLAGE
MÉTHODE ET SYSTÈME DE LEVAGE DES ÉLÉMENTS LOURDS SUR UNE ÉOLIENNE

(30) Priority: 27.02.2006 EP 06110461
(43) Date of publication of application: 19.11.2008
(73) Proprietor: Alstom Renovables España, S.L., 08005 Barcelona (ES)
(72) Inventor: VILADOMIU I GUARRO, Pere, E-08005 Barcelona (ES); VALERO, Sebastián, E-08005 Barcelona (ES)
(74) Representative: ZBM Patents - Zea, Barlocci & Markvardsen
(86) International application number: PCT/EP2006/068056
(87) International publication number: WO 2007/096008

(56) References cited:
- EP-A- 1 101 934
- EP-A- 1 239 150
- EP-A- 1 577 550
- EP-A- 1 677 007
- WO-A-01/94249
- WO-A-02/34664
- WO-A-2006/013222

## Description

### Field of the invention

The present invention relates to a method and a system for performing operations on a wind turbine that involve handling heavy parts therein, particularly for hoisting and lowering heavy parts for replacement or repair.

A nacelle frame assembly is further provided including a nacelle frame having first hoisting means permanently mounted thereon.

### BACKGROUND ART

Heavy parts in a wind turbine, such as a generator, a gearbox or a transformer, are typically handled by means of terrestrial and marine cranes. Said cranes are large and bulky, so that they are not sufficiently efficient for lowering the parts from the nacelle frame of the wind turbine and hoisting them back to the nacelle frame. Such cranes are expensive so that a reduced number of said cranes is available for each wind turbine having parts to be handled. As a consequence, transportation of the cranes to the site where the wind turbine is operating is usually required with the resulting added cost of transportation apart from crane renting.

Attempts for overcoming such problem have been proposed consisting in providing a crane on the nacelle frame. The crane mounted on the frame is however difficult to be secured thereto and to become balanced when handling a heavy part of the wind turbine, such as the generator.

Other solutions, such as that in EP1577550, have been proposed in which a winch is provided on the nacelle frame of the wind turbine. In said patent, a freely supported winch is provided on a carriage in a nacelle frame for lowering heavy parts from and raising them to the wind turbine by means of a cable.

The winch used for this purpose is capital intensive since it must be quite heavy and cumbersome for withstand the high loads in use.

WO0234664 refers to a method for placing a crane in connection with a windmill. An assembly crane permanently mounted in the wind mill is used for hoisting a separate service crane which service crane is pulled itself up to the nacelle by using its own means mounted thereon. The service crane is temporarily secured for operation on a foundation in the nacelle.

WO2006013222 discloses a movable independent crane system for moving or replacing components during maintenance operations and for mounting wind generators. The crane is hoisted to the nacelle by a hoisting device by first hoisting an intermediate structure and then the remaining parts of the crane.

### SUMMARY OF THE INVENTION

The present invention provides a method for performing operations on a wind turbine in accordance with claim 1.

According to one aspect of the invention, the first hoisting means or the second hoisting means, or both, is a power hoist. Power hoist as used herein is any of several devices which employ a system of pulleys and chains, ropes or wires, etc. arranged to gain mechanical advantage for hoisting and pulling parts. Power hoists may be, for example, hydraulic or electric chain hoists, wire rope hoists, etc.

Winch, as used herein, refers to a device having a smooth or grooved winding drum carrying one or more chains, cables or roped rolled up therein in one or more wraps. The invention makes particular use of a powered grooved drum carrying a cable in one wrap. The winch is mounted on a four-wheeled birail running trolley.

In some embodiments, said winch is provided with a coupling structure for attachment to the nacelle frame. In one embodiment, the winch is hoisted by the second hoisting means.

The winch is subsequently removably mounted on the nacelle frame of the wind turbine, particularly at the rear portion thereof.

Winch displacement can be carried out until it becomes substantially above one opening formed on the lower portion of the nacelle frame. Then, the heavy part can be lowered therefrom by the winch so that a new or repaired part is then hoisted again back to the nacelle frame by said winch. When the new or repaired part has been fitted in the wind turbine, the winch, the crane means and the second hoisting means are disassembled and lowered from the nacelle frame.

The invention further provides a system for performing operations on a wind turbine that involve handling heavy parts. The wind turbine comprises a nacelle frame and a first hoisting means permanently mounted on said nacelle frame, a second hoisting means intended to be hoisted on the nacelle frame by the first hoisting means, and a winch intended to be hoisted to the nacelle frame by the second hoisting means and appropriate for handling heavy parts of the wind turbine.

In one embodiment, at least one of said first and second hoisting means in said system is a power hoist.

According to the invention, there is further provided a nacelle frame assembly for a wind turbine, as set out in claim 11.

In one embodiment of the nacelle frame assembly, at least one of said first and second hoisting means is a power hoist.

The invention makes use of three hoisting means: first and second power hoists, and a winch. In one particular case, the first hoisting means may be a overhead electric chain hoist, more particularly a overhead electric single chain hoist. The second hoisting means may be a hook electric chain hoist and the winch may be one selected from a birail electric wire rope hoist, a birail electric winch hoist or a running trolley winch hoist.

The use of such hoisting means, one more powerful than the other, makes the over-sizing of the first, permanently mounted hoisting means to be unnecessary. The first power hoist is a device which is mounted on each wind turbine. The method of the invention allows moderate weight pieces or assemblies to be efficiently handled and hoisted to and lowered from the nacelle. For obtaining a cost effective method, the permanently mounted first power hoist is not capable of hoisting the winch and therefore an intermediate power hoist is used. If only two hoisting means are employed, this would involve the first power hoist to be over-sized and consequently making the whole assembly and method capital intensive for each wind turbine. Power hoist and winch costs may be shared by a large number of wind turbines. Power hoists have low weight and small size so they can be hoisted all at once and handled reasonably comfortably within the space bound inside the nacelle and placed in the corresponding location without requiring assembling operations.

### BRIEF DESCRIPTION OF THE DRAWINGS

A particular embodiment of a system for handling parts in a wind turbine according to the present invention will be described in the following, only by way of non-limiting example, with reference to the appended drawings, in which:

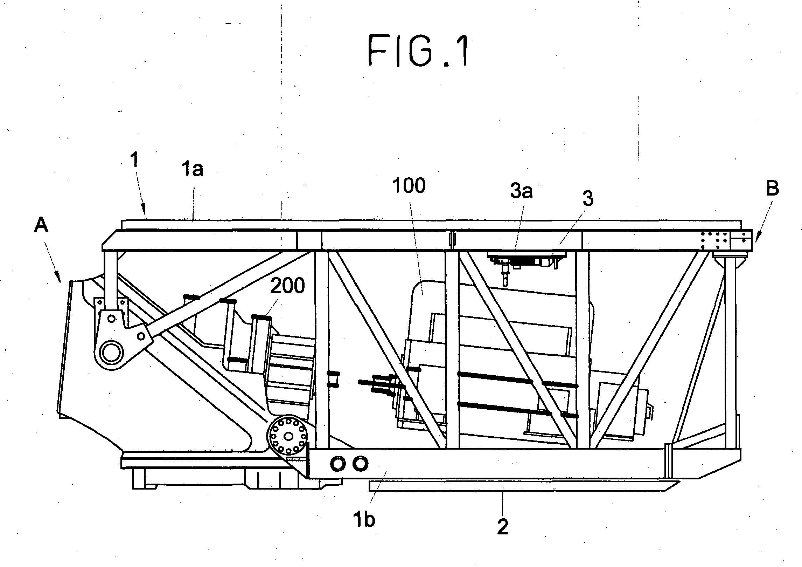

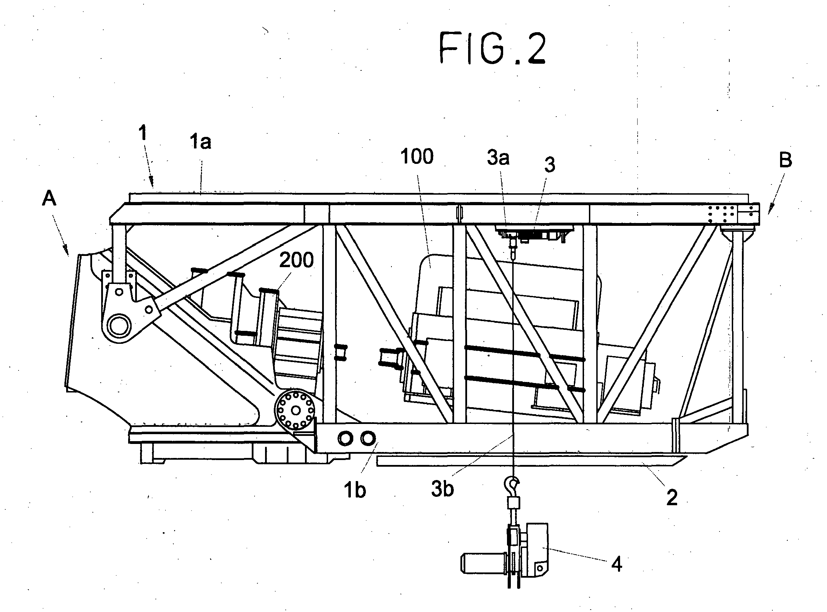

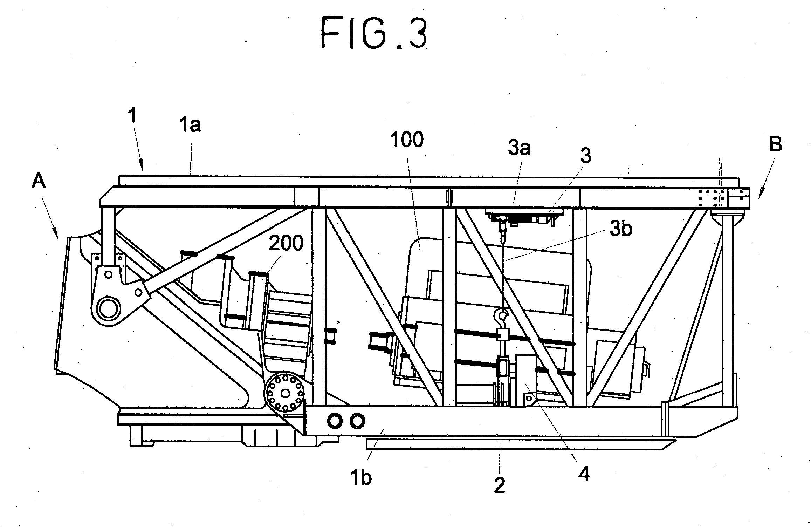

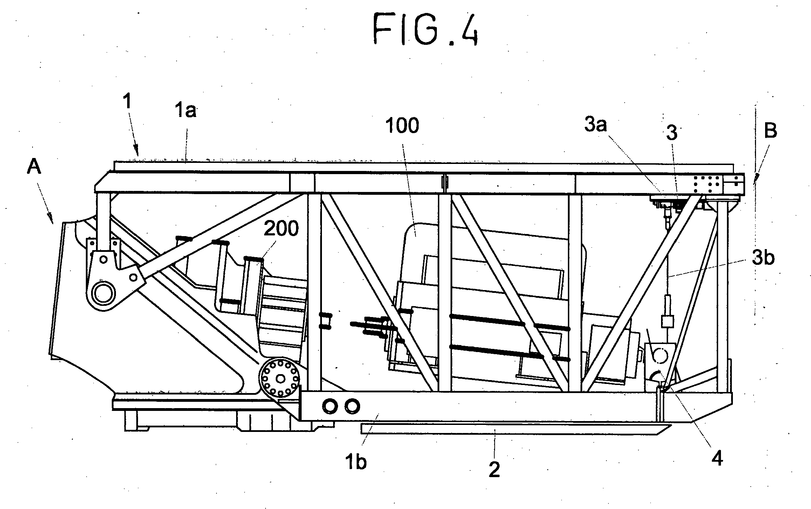

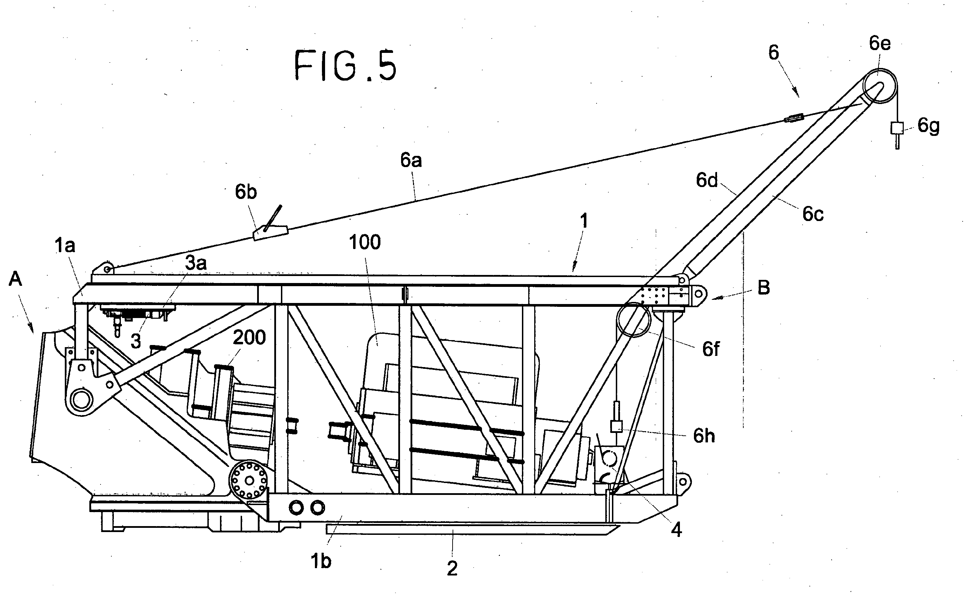

Figs. 1-9 are elevational views showing a nacelle frame with heavy parts of a wind turbine therein which are to be repaired or replaced by using the system according to the method of the invention.

### DETAILED DESCRIPTION OF PARTICULAR EMBODIMENTS

A system for performing operations that involve handling heavy parts, such as a generator 100, a gearbox 200 or a transformer (not shown), on a wind turbine is shown in the figures herein attached. Such handling operations to be performed through the system that will be now described may be, for example, lowering and raising such parts 100, 200 (or other heavy parts in the wind turbine) for being either replaced or repaired.

A nacelle frame 1 is shown having a front portion A where the wind blades of the wind turbine (not shown) are arranged, and a rear portion B opposite said front portion A.

The nacelle frame 1 is formed with a metal structure having upper section members or rails 1a and lower section members 1b. A lower opening 2 is formed in said lower section member 1 b so that at least some of the heavy the parts 100, 200, etc. of the wind turbine can be passed through the structure of the nacelle frame 1.

A first, lightweight hoisting means 3 is permanently mounted on an upper portion of the nacelle frame 1 by means of a carriage 3a. The first hoisting means 3 may be, for example, a hydraulic or electrical power hoist which can be moved sideways in said carriage 3a. In turn, the carriage 3a may be moved lengthways along the upper portion of the nacelle frame 1 so that it may be positioned substantially aligned above the opening 2 of the nacelle frame 1. The first power hoist 3 is provided with hanging means 3b and it is capable of raising parts of the order of 1,000 Kg.

A second hoisting means 4 is further provided. This second hoisting means 4 may also be, for example, a hydraulic or electrical power hoist, preferably a chain hoist. The second power hoist 4 is more powerful than the first power hoist 3 and it is capable of raising heavier parts, of the order of 9,000 Kg. The hanging means 3b in the first power hoist 3 are suitable for hoisting the second power hoist 4. The second power hoist 4 is removably mounted to a rear portion B of the nacelle frame 1 of the wind turbine. The second power hoist 4 comprises a drive chain 6d.

A crane means 6 is further provided at the rear portion B of the nacelle frame 1. The crane means 6 has a tension wire 6a one end of which is connected to the front portion A of the nacelle frame 1. The tension wire 6a is provided with tension means 6b, such as for example a tooth and pawl mechanism, for adjusting tension in the tension wire 6a. The crane means 6 further includes a crane arm or jib 6c mounted on the rear portion of the nacelle frame 1 and it carries the chain 6d of the second power hoist 4 running between pulleys 6e, 6f. One end 6g of said chain 6d is adapted for hoisting a winch 5, the other end 6h thereof being connected to the second power hoist 4.

The winch 5 has a still higher weight capacity, such as of the order of 30,000 Kgs. It comprises a coupling structure 5a adapted for being attached to the rear portion B of the nacelle frame 1, and a wire rope reel 5b for hoisting the parts 100, 200. The winch 5 is also adapted for being moved along the rails 1a of the nacelle frame 1, as explained below.

The method for handling the parts 100, 200 in the wind turbine by means of the above described system is as follows.

For lowering, for example, the generator 100 from the nacelle frame 1, according to the method of the invention, the second power hoist 4 (see fig. 2) and the crane means 6 are hoisted by the first power hoist 3 from the workplace ground. Both the second power hoist 4 and the crane means 6 are mounted at the rear portion B of the nacelle frame 1 (see figs. 4 and 5). In this regards the second power hoist 4 is passed through the frame opening 2 and then moved to the rear portion B of the nacelle frame 1.

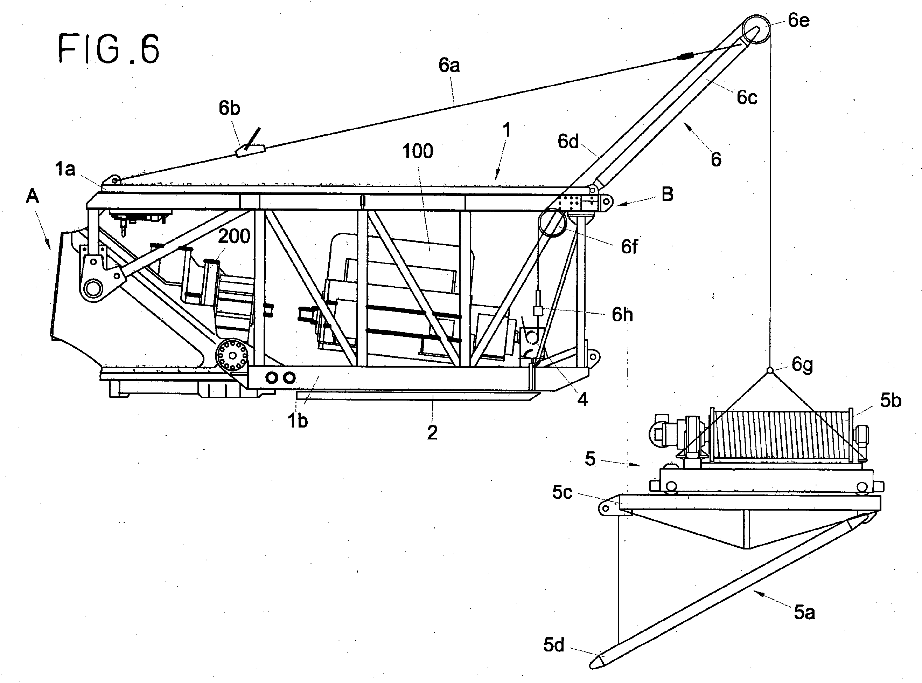

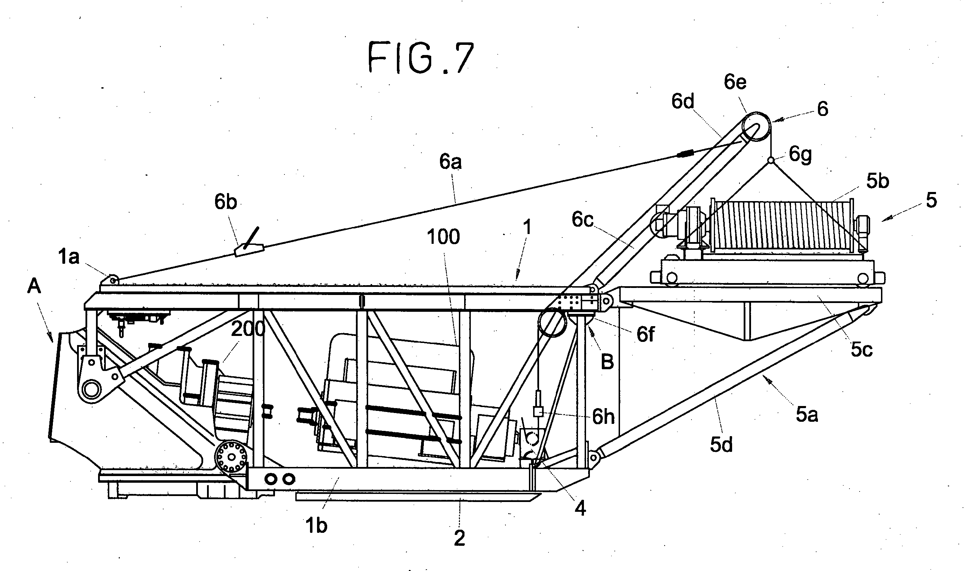

Winch 5 is hoisted to the nacelle frame 1 by the crane means 6, cooperating with the second power hoist 4 (see fig. 6) until two connecting arms 5c, 5d in the coupling structure 5a of the winch 5 face the rear portion B of the structure of the nacelle frame 1 (see fig. 7). The coupling structure 5a of the winch 5 then becomes removably attached to this rear portion B of the nacelle frame 1. It is to be noted, that in other embodiment of the method herein described according to the invention, the winch 5 is directly hoisted by the second power hoist 4 to the nacelle frame 1.

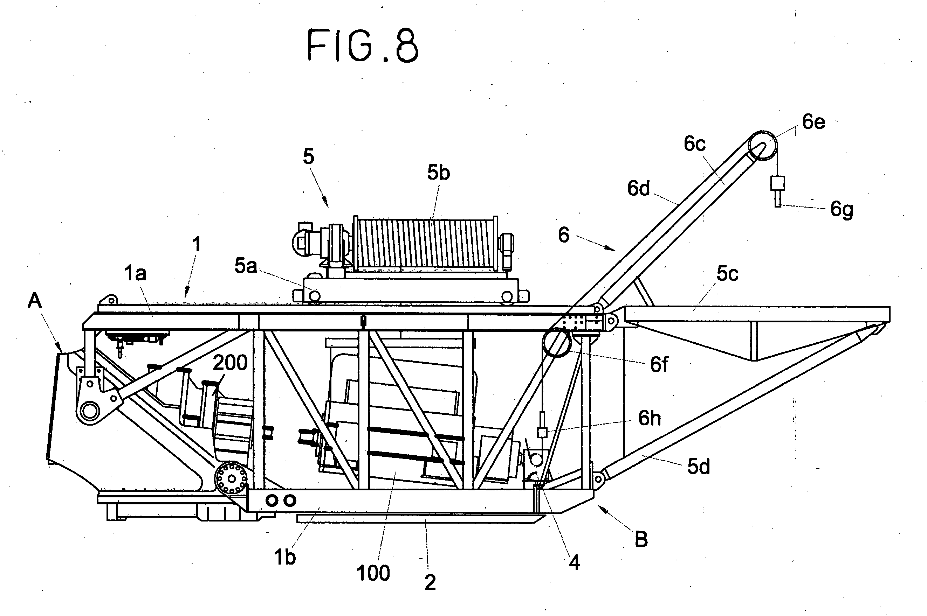

Once the winch 5 has been already removably mounted to the frame rear portion B, it is disengaged from its coupling structure 5a and moved over the upper section members 4a from the rear portion B tot the front portion A of the nacelle frame 1 until it becomes substantially aligned with the opening 2 as shown in fig. 8.

Therefore, three hoisting means are used (a first power hoist 3, a second, chain power hoist 4 and a winch 5) all of them preferably electric and all working in sequence. The winch 5 will be used to handle the heavy parts (such as the generator 100) of the nacelle. In the claimed method, one hoisting means is hoisted by another hoisting means.

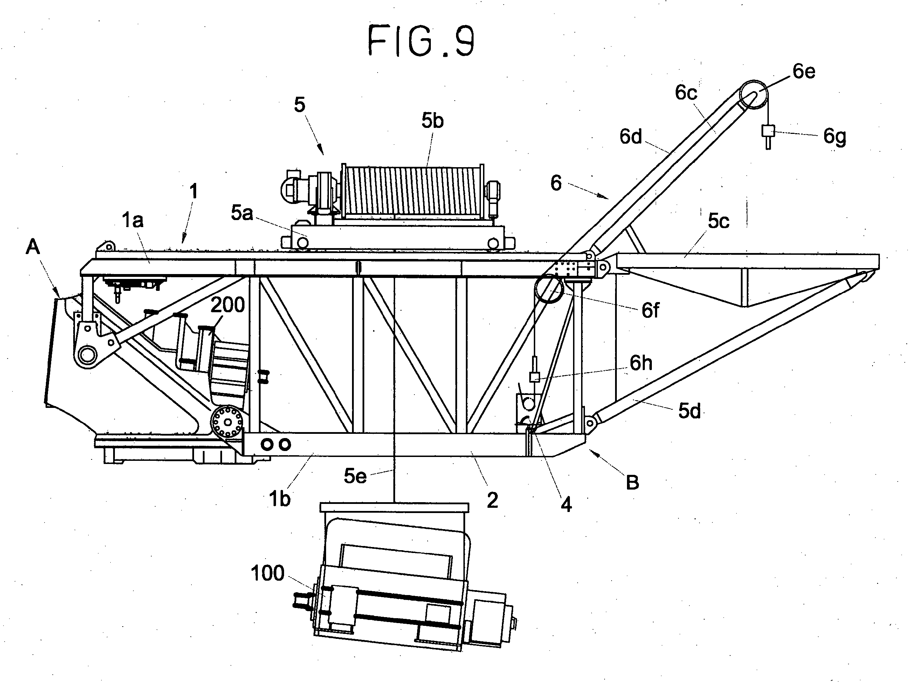

The generator 100 is then coupled to one end of the wire rope 5e of the winch 5 and it is lowered to the ground so that a new or repaired generator 100 is hoisted again to the nacelle frame 1, as shown in fig. 9.

Once the new or repaired generator 100 has been fitted in the wind turbine, the winch 5, the second power hoist 4 and the crane means 6 are disassembled and lowered from the nacelle frame 1.

The above described method for handling operations may be also employed for raising and lowering other heavy parts in wind turbine, such as for example the gearbox 200 and the transformer (not shown).

As previously described, the heavy the parts 100, 200 to be handled are passed through the opening 2 so that there is not required a completely open deck for handling operations. It is only necessary a small central fringe in the nacelle deck for allowing the winch hoisting cable to passed through. The winch 5 runs through rails 1a that are formed integrally with the nacelle frame 1 and fitted externally to the deck. Therefore, it is not necessary to open the whole deck so that the winch 5 can be displaced.

Modifications considered as convenient may be introduced in the method and system for handling parts in a wind turbine as well as in the nacelle frame assembly described herein provided that the essence of the invention that is summarized in the following claims is not altered.

## Claims

1. A method for performing operations on a wind turbine that involve handling heavy parts (100; 200), said wind turbine comprising a nacelle frame (1) and a first hoisting means (3) permanently mounted on the nacelle frame (1), the method comprising the steps of:
- hoisting a second hoisting means (4) on the nacelle frame (1) by means of the first hoisting means (3), the second hoisting means (4) being more powerful than the first hoisting means (3);
- removably mounting the second hoisting means (4) on the nacelle frame (1);
- hoisting a winch (5) on the nacelle frame (1) by the second hoisting means (4), and removably mounting said winch (5) on rails (1a) provided on the nacelle frame (1), such as to be displaceable along said nacelle frame (1);
- hoisting crane means (6) arranged to cooperate with the second hoisting means (4), and removably mounting said crane means (6) on the nacelle frame (1);
- performing operations that involve handling heavy parts (100; 200), employing the second hoisting means (4); and
- removing from the nacelle frame (1) the second hoisting means (4) and lowering it by means of the first hoisting means (3).

2. A method as claimed in claim 1, **characterized in that** at least one of said first and second hoisting means (3, 4) is a power hoist.

3. A method as claimed in claim 1, wherein said crane means (6) is mounted on the nacelle frame (1) at a rear portion thereof (B), opposite the portion (A) of the frame (1) where the wind blades are arranged.

4. A method as claimed in claim 1, wherein the winch (5) is hoisted employing the second hoisting means (4) and the crane means (6).

5. A method as claimed in any of the preceding claims, wherein the winch (5) is hoisted on the nacelle frame (1) together with a coupling structure (5a) for attachment to the nacelle frame (1).

6. A method as claimed in any of the preceding claims, wherein said winch (5) is employed for handling heavy parts (100; 200) of the wind turbine.

7. A method as claimed in any of the preceding claims, further comprising the step of removing and lowering said winch (5) from the nacelle frame (1).

8. A method as claimed in any of the preceding claims, further comprising the step of removing and lowering said crane means (6) from the nacelle frame (1).

9. A system for performing operations on a wind turbine that involve handling heavy parts (100; 200), said wind turbine comprising a nacelle frame (1) and a first hoisting means (3) permanently mounted on said nacelle frame (1),
said system comprising a second hoisting means (4) intended to be hoisted to the nacelle frame (1) by the first hoisting means (3), **characterized in that** it comprises a winch (5) intended to be hoisted on the nacelle frame (1) by the second hoisting means (4) and appropriate for handling heavy parts (100; 200) of the wind turbine, the winch (5) being displaceable along rails (1a) provided on the nacelle frame (1), and crane means (6) arranged to cooperate with the second hoisting means (4).

10. A system as claimed in claim 9, **characterized in that** at least one of said first and second hoisting means (3, 4) is a power hoist.

11. A nacelle frame assembly for a wind turbine, said assembly comprising a nacelle frame (1) and a first hoisting means (3) permanently mounted on the nacelle frame (1), a second hoisting means (4) which is appropriate for being hoisted to the nacelle frame (1) by the first hoisting means (3) and temporarily mounted on the nacelle frame (1) for performing operations that involve handling heavy parts (100; 200), when the nacelle frame (1) is arranged on a wind turbine, **characterized in that** it further comprises a winch (5) intended to be hoisted on the nacelle frame (1) by the second hoisting means (4) and appropriate for handling heavy parts (100; 200) when the nacelle frame (1) is arranged on a wind turbine, the winch (5) being displaceable along rails (1 a) provided on the nacelle frame (1) and crane means (6) arranged to cooperate with the second hoisting means (4).

12. A nacelle frame assembly as claimed in claim 11, **characterized in that** at least one of said first and second hoisting means (3, 4) is a power hoist.

## Patentansprüche

1. Verfahren zur Durchführung von Operationen an einer Windkraftanlage umfassend die Behandlung schwerer Bauteile (100; 200), wobei die Windkraftanlage einen Gondelrahmen (1) umfasst und ein erstes Hebemittel (3) umfasst, das ständig auf dem Gondelrahmen (1) montiert ist, wobei das Verfahren folgende Schritte umfasst:
- das Heben eines zweiten Hebemittels (4) auf den Gondelrahmen (1) mittels des ersten Hebemittels (3), wobei das zweite Hebemittel (4) leistungsstärker als das erste Hebemittel (3) ist;
- die abnehmbare Montierung des zweiten Hebemittels (4) auf dem Gondelrahmen (1);
- das Heben einer Winde (5) auf den Gondelrahmen (1) durch das zweite Hebemittel (4) und die abnehmbare Montierung der Winde (5) auf Schienen (1a), die auf dem Gondelrahmen (1) vorhanden sind, so dass sie verstellbar entlang des Gondelrahmens (1) ist;
- das Heben eines Kranmittels (6), das so angeordnet ist, um mit dem zweiten Hebemittel (4) zusammenzuwirken und die abnehmbare Montierung des Kanmittels (6) auf den Gondelrahmen (1);
- die Durchführung von Operationen, die die Behandlung schwerer Bauteile (100; 200) durch den Einsatz vom zweiten Hebemittel (4) umfassen; und
- das Aufheben des zweiten Hebemittels (4) vom Gondelrahmen (1) und das Absenken desselben mittels des ersten Hebemittels (3).

2. Verfahren nach Anspruch 1, **dadurch gekennzeichnet, dass** mindestens eins von den ersten und zweiten Hebemitteln (3, 4) ein Elektrozug ist.

3. Verfahren nach Anspruch 1, wobei das Kranmittel (6) auf dem Gondelrahmen (1) auf einem hinteren Teil (B) davon montiert ist, der gegenüber dem Teil (A) des Rahmens (1) liegt, in dem die Rotorblätter angeordnet sind.

4. Verfahren nach Anspruch 1, wobei die Winde (5) durch den Einsatz vom zweiten Hebemittel (4) und vom Kranmittel (6) gehoben wird.

5. Verfahren nach einem der vorhergehenden Ansprüche, wobei die Winde (5) auf den Gondelrahmen (1) zusammen mit einer Kupplungsstruktur (5a) zur Befestigung an dem Gondelrahmen (1) gehoben wird.

6. Verfahren nach einem der vorhergehenden Ansprüche, wobei die Winde (5) zur Behandlung schwerer Bauteile (100; 200) der Windkraftanlage eingesetzt wird.

7. Verfahren nach einem der vorhergehenden Ansprüche, das weiterhin den Schritt umfasst, bei dem die Winde (5) vom Gondelrahmen (1) aufgehoben und abgesenkt wird.

8. Verfahren nach einem der vorhergehenden Ansprüche, das weiterhin den Schritt umfasst, bei dem das Kranmittel (6) vom Gondelrahmen (1) aufgehoben und abgesenkt wird.

9. System zur Durchführung von Operationen bei einer Windkraftanlage umfassend die Behandlung schwerer Bauteile (100; 200), wobei die Kraftenergieanlage einen Gondelrahmen (1) und ein erstes Hebemittel (3) umfasst, das ständig auf dem Gondelrahmen (1) montiert ist, wobei das System ein zweites Hebemittel (4) umfasst, das mittels des ersten Hebemittels (3) auf den Gondelrahmen (1) zu heben ist, **dadurch gekennzeichnet, dass** es eine Winde (5) umfasst, die mittels des zweiten Hebemittels (4) auf den Gondelrahmen (1) zu heben ist und die geeignet zur Behandlung schwerer Bauteile (100; 200) der Windkraftanlage ist, wobei die Winde (5) verstellbar entlang Schienen (1a) ist, die auf dem Gondelrahmen (1) vorhanden sind, und dass es ein Kranmittel (6) umfasst, das angeordnet ist, um mit dem zweiten Hebemittel (4) zusammenzuwirken.

10. System nach Anspruch 9, **dadurch gekennzeichnet, dass** mindestens eins von den ersten und zweiten Hebemitteln (3, 4) ein Elektrozug ist.

11. Gondelrahmenanordnung für eine Windkraftanlage, wobei die Anordnung einen Gondelrahmen (1) und ein erstes Hebemittel (3) umfasst, das ständig auf dem Gondelrahmen (1) montiert ist und sie ein zweites Hebemittel (4) umfasst, das geeignet ist, um auf den Gondelrahmen (1) mittels des ersten Hebemittels (3) gehoben zu werden und das zeitweise auf dem Gondelrahmen (1) zur Durchführung von Operationen montiert ist, die die Behandlung schwerer Bauteile (100; 200) umfassen, wenn der Gondelrahmen (1) auf einer Windkraftturbine angeordnet ist, **dadurch gekennzeichnet, dass** sie weiterhin eine Winde (5) umfasst, die zum Heben auf den Gondelrahmen (1) mittels des zweiten Hebemittels (4) ist und die geeignet zur Behandlung schwerer Bauteile (100; 200) ist, wenn der Gondelrahmen (1) auf einer Windkraftanlage angeordnet ist, wobei die Winde (5) entlang Schienen (1a) verstellbar ist, die auf dem Gondelrahmen (1) vorhanden sind und dass sie ein Kranmittel (6) umfasst, das angeordnet ist, um mit dem zweiten Hebemittel (4) zusammenzuwirken.

12. Gondelrahmenanordnung nach Anspruch 11, **dadurch gekennzeichnet, dass** mindestens eins von den ersten und zweiten Hebemitteln (3, 4) ein Elektrozug ist.

## Revendications

1. Procédé pour effectuer des opérations sur une éolienne impliquant la manipulation d'éléments lourds (100; 200), comprenant ladite éolienne un châssis (1) de nacelle et un premier moyen (3) de levage qui est monté de façon permanente sur le châssis (1) de nacelle, comprenant le procédé les étapes suivantes:
- élever un deuxième moyen (4) de levage sur le châssis (1) de nacelle moyennant le premier moyen (3) de levage, étant le deuxième moyen (4) de levage plus puissant que le premier moyen (3) de levage;
- monter de façon amovible le deuxième moyen (4) de levage sur le châssis (1) de nacelle;
- élever un treuil (5) sur le châssis (1) de nacelle moyennant le deuxième moyen (4) de levage et monter de façon amovible ledit treuil (5) sur des rails (1a) fournis sur le châssis (1) de nacelle de façon qu'il puisse être déplacé le long dudit châssis (1) de nacelle;
- élever un moyen (6) de grue disposé pour coopérer avec le deuxième moyen (4) de levage et élever de façon amovible ledit moyen (6) de grue sur ledit châssis (1) de nacelle;
- effectuer des opérations impliquant la manipulation d'éléments lourds (100; 200) en employant le deuxième (4) moyen de levage; et
- enlever du châssis (1) de nacelle le deuxième moyen (4) de levage et le baisser en utilisant le premier moyen (3) de levage.

2. Procédé selon la revendication 1, **caractérisé en ce qu'**au moins un desdits premier et deuxième moyens (3, 4) de levage est un palan électrique.

3. Procédé selon la revendication 1, dans lequel ledit moyen (6) de grue est monté sur le châssis (1) de nacelle sur une partie arrière (B) du même opposée à la partie (A) du châssis (1) sur laquelle les pales de l'éolienne sont disposées.

4. Procédé selon la revendication 1, dans lequel le treuil (5) est élevé en employant le deuxième moyen (4) de levage et le moyen (6) de grue.

5. Procédé selon l'une quelconque des revendications précédentes, dans lequel le treuil (5) est élevé sur le châssis (1) de nacelle conjointement avec une structure (5a) de couplage conçue pour être fixée au châssis (1) de nacelle.

6. Procédé selon l'une quelconque des revendications précédentes, dans lequel ledit treuil (5) est employé pour la manipulation d'éléments lourds (100; 200) de l'éolienne.

7. Procédé selon l'une quelconque des revendications précédentes, comprenant en outre l'étape d'enlever et baisser ledit treuil (5) dudit châssis (1) de nacelle.

8. Procédé selon l'une quelconque des revendications précédentes, comprenant en outre l'étape d'enlever et baisser ledit moyen (6) de grue dudit châssis (1) de nacelle.

9. Système pour effectuer des opérations sur une éolienne impliquant la manipulation d'éléments lourds (100; 200), comprenant ladite éolienne un châssis (1) de nacelle et un premier moyen (3) de levage qui est monté de façon permanente sur ledit châssis (1) de nacelle, comprenant ledit système un deuxième moyen (4) de levage conçu pour être élevé sur le châssis (1) de nacelle moyennant le premier moyen (3) de levage, **caractérisé en ce qu'**il comprend un treuil (5) conçu pour être élevé sur le châssis (1) de nacelle moyennant le deuxième moyen (4) de levage et étant approprié pour la manipulation d'éléments lourds (100; 200) de l'éolienne, pouvant le treuil (5) être déplacé le long des rails (1a) fournis sur le châssis (1) de nacelle, et étant le moyen (6) de grue disposé pour coopérer avec le deuxième moyen (4) de levage.

10. Procédé selon la revendication 9, **caractérisé en ce qu'**au moins un desdits premier et deuxième moyens (3, 4) de levage est un palan électrique.

11. Assemblage de châssis de nacelle pour éolienne, comprenant ledit assemblage un châssis (1) de nacelle et un premier moyen (3) de levage monté de façon permanente sur ledit châssis (1) de nacelle, un deuxième moyen (4) de levage qui est approprié pour être élevé sur ledit châssis (1) de nacelle moyennant le premier moyen (3) de levage et qui est monté temporairement sur le châssis (1) de nacelle en vue d'effectuer des opérations impliquant la manipulation d'éléments lourds (100; 200), lorsque le châssis (1) de nacelle est disposé sur une éolienne, **caractérisé en ce qu'**il comprend en outre un treuil (5) conçu pour être élevé sur le châssis (1) de nacelle moyennant le deuxième moyen (4) de levage et étant approprié pour la manipulation d'éléments lourds (100; 200) lorsque le châssis (1) de nacelle est disposé sur une éolienne, pouvant le treuil (5) être déplacé le long des rails (1a) fournis sur le châssis (1) de nacelle et des moyens (6) de grue disposés pour coopérer avec le deuxième moyen (4) de levage.

12. Procédé selon la revendication 11, **caractérisé en ce qu'**au moins un desdits premier et deuxième moyens (3, 4) de levage est un palan électrique.
